# DEMANDE DE BREVET EUROPEEN

(11) **EP 1 826 559 A1**
(43) Date de publication de la demande: **29.08.2007**
(21) Numéro de dépôt: 06110284.4
(22) Date de dépôt: 22.02.2006
(51) Int. Cl.: G01N 29/22

(54) **Chariot pour le maintien d'un palpeur à ultrasons**

(71) Demandeur: Renard, M. Frédéric, 4190 Ferrière (BE)
(72) Inventeur: Renard, M. Frédéric, 4190 Ferrière (BE)
(74) Mandataire: Van Straaten, Joop

(57) **Abrégé**

L'invention concerne un chariot (2) pour maintenir un palpeur (20) à ultrasons de contrôle de soudures (18) à une distance donnée d'une surface plane (22) et apte à être déplacé le long de la surface (22) à l'aide d'une seule main, comprenant des roues (10); une ouverture (16) pour recevoir le palpeur (20); et des moyens pour maintenir le palpeur (20) dans l'ouverture (16) à une distance donnée de la surface (22). Il comprend en outre deux bords (14); un profil en U (4) s'étendant entre les deux bords (14) et comprenant un fond (6) et deux ailes (8), le profil en U (4) définissant l'ouverture (16); les roues (10) étant montées sur les ailes (8) pour permettre en opération le déplacement sur la surface (22) du chariot (2) sur ses roues (10) lorsque les ailes (8) sont dirigées vers la surface (22); l'ouverture (16) s'étendant jusqu'à au moins un des deux bords (14) de telle manière à permettre le maintien du palpeur (20) dans l'ouverture (16) à fleur d'au moins un des bords (14).

## Description

### Domaine de l'invention

L'invention concerne un chariot pour maintenir un palpeur pour le contrôle par ultrasons de soudures à une distance donnée d'une surface subtantiellement plane et apte à être déplacé le long de la surface à l'aide d'une seule main, comprenant des roues ou chenilles; une ouverture pour recevoir le palpeur; et des moyens pour maintenir le palpeur dans l'ouverture à une distance donnée de la surface.

### État de la technique

Les palpeurs en question sont de petits émetteurs/récepteurs d'ultrasons, destinés à envoyer une onde ultrasonore dans une pièce à contrôler, par exemple en métal ou en plastique. Le palpeur enregistre l'écho de l'onde envoyée. L'analyse de l'écho permet de détecter les défauts dans la pièce ou dans une soudure, ainsi que la position et la nature de ces défauts.

Il est nécessaire pour le bon fonctionnement du palpeur que sa surface émettrice et réceptrice soit suffisant proche de la surface de la pièce de manière à ce que l'espacement puisse être rempli entièrement par un couplant acoustique, par exemple de l'eau. De cette façon, l'onde se transmet bien de la surface à la pièce par le couplant sans rencontrer d'air. En outre, la surface du palpeur doit être bien parallèle à la surface de la pièce à inspecter. De cette manière, l'angle d'attaque de l'onde ultrasonore par rapport à la surface de la pièce est conforme aux spécifications du palpeur et la mesure obtenue est précise.

En opération, le palpeur peut être déplacé à la main le long de la surface d'une pièce, par exemple une poutre métallique. Il est ainsi possible de réaliser des contrôles de soudures tout le long d'un ouvrage métallique, ou selon un quadrillage déterminé. Pour éviter l'usure de la surface du palpeur, une semelle en plastique est disposée sous le palpeur par collage.

Le déplacement du palpeur le long de la surface de la pièce use toutefois rapidement la semelle et rend son épaisseur non uniforme, ce qui affecte l'angle d'attaque de l'onde ultrasons et donc les mesures. Le remplacement régulier des semelles est coûteux. En outre, l'étalonnage est nécessaire avant chaque utilisation pour prendre en compte la variation de la position du point de sortie de l'onde ultrasonore due à l'usure de la semelle et à la variation de son épaisseur. Une absence d'étalonnage peut créer une erreur d'angle.

L'utilisation d'un chariot pour le maintien du support résout ces problèmes. On connaît de tels chariots.

La demande de brevet japonaise JP09159659 divulgue un chariot pour le maintien d'un palpeur droit à une distance constante de la surface d'un matériau. Le chariot comprend quatre roues en acier disposées à ses quatre coins. Le chariot est de forme globalement tubulaire à section quadrangulaire. Le palpeur est inséré par le haut et emboîté à l'intérieur de l'espace d'insertion de forme rectangulaire jusqu'à ce qu'il n'y ait plus de différence de niveau entre la surface de départ de l'onde ultrasonore et la base du chariot.

Ce type de chariot évite l'usure prématurée d'un palpeur droit de détection par ondes ultrasonores longitudinales de défauts à l'intérieur d'une pièce à contrôler.

Le contrôle manuel d'une soudure brute, c'est-à-dire non arasée, est réalisé avec un palpeur d'angle émettant des ondes ultrasonores transversales. Deux modes de contrôle de soudure non arasée avec palpeur d'angle sont possibles sur la surface de la pièce.

Selon un premier mode, une onde ultrasonore est émise en direct (« au bond ») par le palpeur dans la pièce vers la soudure et l'écho renvoyé est reçu par le récepteur du palpeur et analysé pour la détection de défaut de soudure. Ce mode est appelé contrôle direct.

Selon un second mode, l'onde ultrasonore est émise vers la surface opposée de la pièce, réfléchie par celle-ci et envoyée vers la soudure. L'écho est retourné vers la surface opposée, réfléchi par celle-ci et reçu par le récepteur du palpeur. Ce mode est appelé contrôle par réflexion, indirect ou « au bond et demi ». Ce mode permet de détecter par réflexion des défauts dans la zone adjacente à la surface de la soudure non arasée, ce qui n'est pas possible avec le premier mode direct limité à une certaine distance de la surface de la mesure.

### Résumé de l'invention

Il a été observé que le contrôle direct par ultrasons de soudures non arasées près de leur surface permet de détecter plus facilement certains défauts qui sont difficilement détectables voire indétectables par un contrôle indirect. Cela est probablement dû à l'orientation des défauts dans la soudure et à leur position relative les uns par rapport aux autres.

Un but de l'invention est de fournir un chariot pour le support de palpeur d'angle, permettant un contrôle en direct plus près de la surface non arasée de la soudure.

A cette fin, le chariot selon l'invention est caractérisé en ce qu'il comprend en outre deux bords; un profil en U s'étendant entre les deux bords et comprenant un fond et deux ailes, le profil en U définissant l'ouverture; les roues ou chenilles étant montées sur les ailes pour permettre en opération le déplacement sur la surface du chariot sur ses roues ou chenilles lorsque les ailes sont dirigées vers la surface; l'ouverture s'étendant jusqu'à au moins un des deux bords pour permettre le maintien du palpeur dans l'ouverture à fleur ou partiellement au-delà d'au moins un des bords. Par profil en U, il faut comprendre pièce fabriquée selon un profil en U ou profilé en U.

La forme du profil et de l'ouverture de celui-ci permet le maintien d'un palpeur à fleur du bord du chariot. Ceci permet d'approcher le palpeur plus près de la soudure non arasée, en gardant un espacement constant entre la surface émettrice du palpeur et la surface de la pièce à contrôler. De cette manière, une onde émise avec un angle donné, par exemple 45°, 60° ou 70°, par rapport à la normale à la surface de la pièce peut atteindre une zone plus proche de la surface non arasée, sans qu'il soit nécessaire de retirer le palpeur du support. Le problème observé et résolu est propre aux soudures non arasées.

En opération, le chariot est déplacé manuellement par rapport à une soudure continue non arasée à la fois selon un mouvement de va-et-vient perpendiculaire à la soudure, pour détecter des défauts à différentes profondeurs sous la surface de la soudure, et également selon un mouvement transversal, c'est-à-dire parallèle à la soudure, pour détecter des défauts dans une zone à une profondeur donnée sous la surface de la soudure.

Dans l'état de la technique, l'observation de la zone d'une soudure proche de sa surface se fait soit par réflexion, soit par double, triple voire quadruple réflexion. Le contrôle par double ou triple réflexion (ou bonds) entraîne une perte de transfert, c'est-à-dire une atténuation du signal, d'autant plus importante que la distance parcourue par l'onde est grande. Afin de compenser cette perte de transfert, le signal émis est suramplifié. Ceci entraîne la détection d'échos fantômes indésirables, causées par des défauts de la matière de base présents sur le chemin de l'onde.

Le contrôle indirect entraîne également une perte de précision angulaire entraînant à son tour une perte de précision dans l'estimation de la position d'un défaut dans la soudure (rendant la réparation de la soudure plus difficile et coûteuse). La perte de précision angulaire est due à la distance parcourue par l'onde ultrasonore et par le fait que les réflexions entraînent un évasement du faisceau.

Il n'est pas nécessaire de fournir un dispositif intégré au support pour l'alimentation en couplant de la zone sous le palpeur. Un couplant peut être disposé sur toute la surface proche de la soudure brute à contrôler.

Le chariot selon l'invention est également adapté pour le contrôle de soudures en K entre l'âme et les semelles d'une poutre en I.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
- Fig. 1,: 2 et 3 montrent trois vues en perspective isométrique d'une même réalisation particulière du chariot selon l'invention;
- Fig. 4: montre un schéma du principe général de contrôle d'une soudure non arasée avec le chariot selon l'invention, muni d'un palpeur d'angle;
- Fig. 5: montre un schéma du principe général de contrôle d'une soudure en K avec le chariot selon l'invention, muni d'un palpeur d'angle;
- Fig. 6: montre une vue schématique du profil en U d'un chariot selon une réalisation particulière de l'invention; et
- Fig. 7: montre une vue schématique d'un palpeur pouvant être maintenu par le chariot selon l'invention.

### Description détaillée de modes de réalisation particuliers

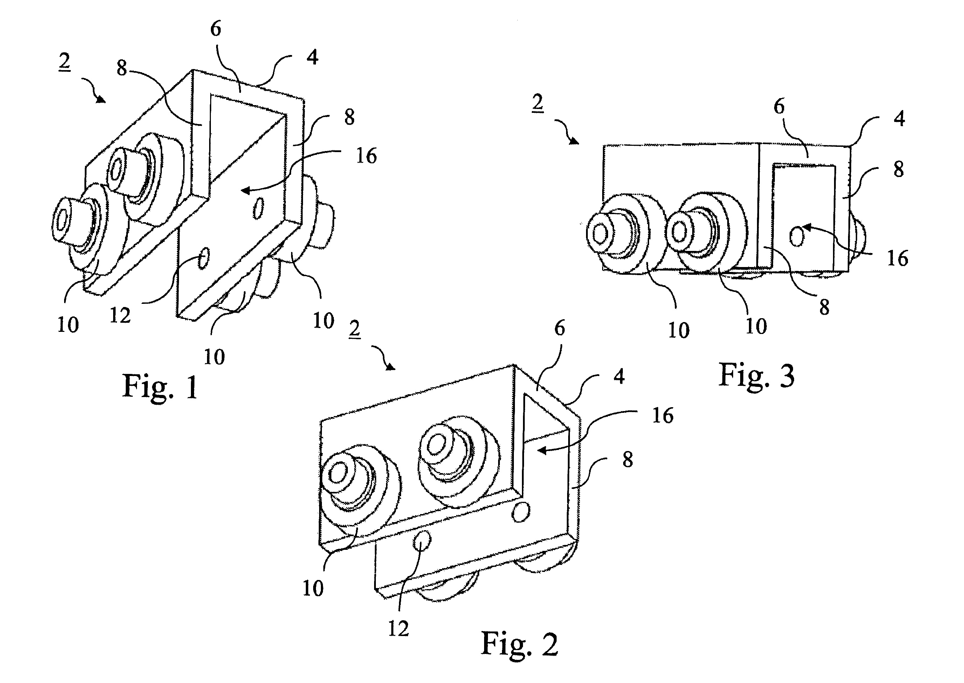

Les Fig. 1, 2 et 3 illustrent une même réalisation particulière du chariot 2 selon l'invention. Le chariot 2 est constitué d'un profil 4 en U comprenant un fond 6 et deux ailes 8. Sur chaque aile 8 sont montées deux roues 10 par l'intermédiaire de deux vis introduites chacune dans un trou taraudé 12.

Des roulements à billes hermétiques fermés par caoutchouc sont disposés entre les vis introduites dans les trous taraudés 12 et les roues 10. Ces roulements sont en acier inoxydable, de manière à présenter une bonne résistance à l'usure et à l'oxydation. Une bonne isolation hermétique des roulements est importante pour éviter le mélange du couplant avec la graisse à l'intérieur des roulements. Des roulements miniatures de type 625-2RS en inox de marque EZO peuvent par exemple être utilisés. D'autres types de roulements peuvent aussi être utilisés.

Les roues 10 sont positionnées relativement au profil 4 en U de manière à dépasser légèrement du bout des ailes 8. Ceci permet d'éviter d'user les ailes 8 du profil 4 et permet d'éviter d'abîmer la surface 22 sur laquelle se déplace le chariot 2.

Le chariot 2 est compact et présente des dimensions qui permettent que celui-ci soit tenu dans une seule main. En d'autres termes, la largeur du profil 4 ne doit pas dépasser 80 à 100 millimètres. Le palpeur 20 peut être mis à fleur ou partiellement au-delà (en porte-à-faux) d'un des bords 14 du chariot 2.

Les roues 10 sont disposées à l'extérieur du profil 4 en U par rapport à l'ouverture 16 de telle manière à permettre à un palpeur 20 de largeur substantiellement égale à la largeur de l'ouverture 16 d'être disposé aisément à fleur ou en dépassement d'un des bords 14 du chariot 2. Le palpeur 20 est ainsi facilement disposé et maintenu dans l'ouverture 16.

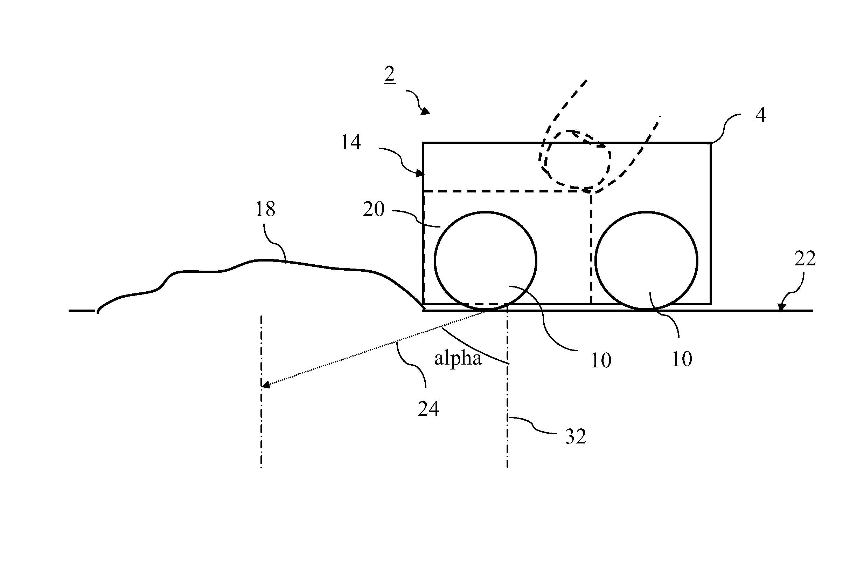

La Fig. 4 montre un schéma du principe général de contrôle d'une soudure 18 non arasée avec le chariot 2 selon l'invention, muni d'un palpeur 20 d'angle (représenté en pointillés) dans son ouverture 16. Le chariot 2 est disposé sur la surface 22 à proximité de la soudure 18. Une onde ultrasonore 24 est émise selon un angle alpha par rapport à la normale 32 à la surface 22. La distance en surface entre l'origine de l'onde 24 et la soudure 18 non arasée étant relativement courte, la distance entre la surface de la soudure 18 et la zone accessible au contrôle est également courte, pour un angle alpha donné par rapport à la normale 32. Si l'onde 24 était émise d'un endroit plus proche du milieu du chariot 2, la distance entre la surface de la soudure 18 et la zone accessible au contrôle serait relativement plus importante.

En opération, le chariot 2 selon l'invention permet le contrôle d'une zone plus proche de la surface de la soudure 18, sans devoir requérir à une mode de contrôle indirect, ou par réflexion, sujet à des pertes de transfert, des pertes de précision angulaire et ne permettant pas le contrôle précis de certains types de défauts dans la soudure 18.

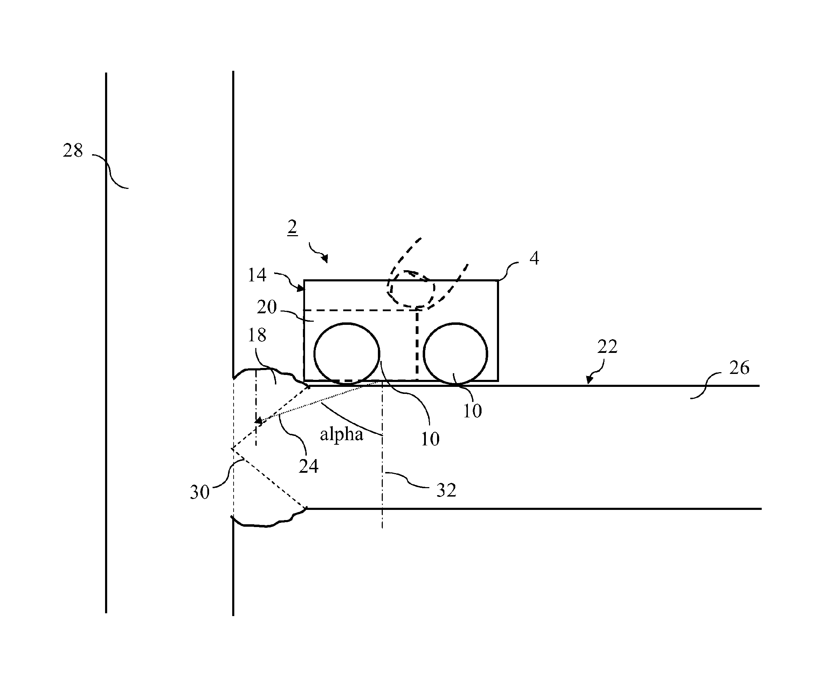

La Fig. 5 montre un schéma d'un chariot 2 selon l'invention à proximité d'une soudure 18 en K. L'âme 26 et la semelle 28 d'une poutre en I sont représentées. Le chanfrein 30 est également représenté. Le chariot 2 est muni d'un palpeur 20 (représenté en pointillés).

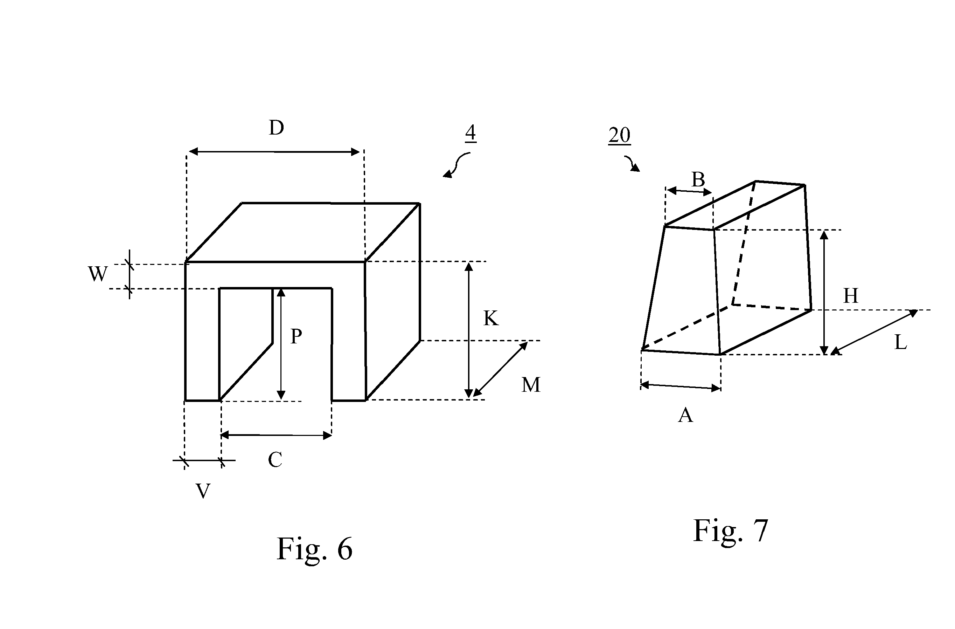

Le chariot 2 selon l'invention, représenté schématiquement à la Fig. 6, peut présenter des dimensions différentes adaptées aux dimensions du palpeur 20.

Dans une réalisation particulière, le chariot 2 a les dimensions suivantes. Le profil 4 en U a une hauteur K de 25 millimètres sans les roues (hauteur totale, extérieure des ailes 8), une largeur D de 25 millimètres et une longueur M de 45,5 millimètres. La profondeur P de l'ouverture 16 est de 21 millimètres et sa largeur C est de 17 millimètres. L'épaisseur V des ailes 8 et l'épaisseur W du fond 6 sont de 4 millimètres. Les roues 10 (non représentées sur la Fig. 6) sont disposées de telle manière à dépasser d'un peu plus d'1 millimètre du bout des ailes 8.

Le chariot 2 selon cette réalisation particulière peut maintenir un palpeur 20, comme illustré à la Fig. 7, de forme généralement prismatique à deux bases rectangulaires, deux faces rectangulaires de même forme et deux faces trapézoïdales, et présentant les dimensions suivantes:
- une largeur A de 16,8 millimètres en son endroit le plus large, offrant ainsi un jeu latéral de 0,2 millimètres pour placer le palpeur 20 dans l'ouverture 16;
- une largeur B de 15 millimètres en sa base supérieure;
- une hauteur H sans semelle (non nécessaire avec l'utilisation du chariot 2 selon l'invention) de 22 millimètres, offrant ainsi un espacement de 0,1 à 0,4 millimètres entre la surface émettrice du palpeur 20 et la surface 22 de la pièce; et
- une longueur L de 24 millimètres.
   Le palpeur en question peut par exemple être un palpeur MWB 70-4 de la société Krautkrämer GmbH basé à Cologne en Allemagne.

Dans une autre réalisation particulière, le chariot 2 a les dimensions suivantes. Le profil 4 en U a une hauteur K de 40 millimètres sans les roues (hauteur totale, extérieure des ailes 8), une largeur D de 40 millimètres et une longueur M de 55 millimètres. La profondeur P de l'ouverture 16 est de 30,5 millimètres et sa largeur C est de 21,8 millimètres. L'épaisseur V des ailes 8 est de 9 millimètres et l'épaisseur W du fond 6 est de 9,8 millimètres. Les roues 10 sont disposées de telle manière à dépasser de 0,6 millimètres du bout des ailes 8.

Le chariot 2 selon cette réalisation particulière peut maintenir un palpeur 20 de forme généralement prismatique à deux bases rectangulaires, deux faces rectangulaires de même forme et deux faces trapézoïdales, et présentant les dimensions suivantes :
- une largeur A de 21,4 millimètres en son endroit le plus large, offrant ainsi un jeu latéral de 0,4 millimètres pour placer le palpeur 20 dans l'ouverture 16;
- une largeur B de 20 millimètres en sa base supérieure;
- une hauteur H sans semelle de 31 millimètres, offrant ainsi un espacement de 0,1 millimètre entre la surface émettrice du palpeur et la surface 22 de la pièce; et
- une longueur L de 37 millimètres.

Le palpeur en question peut par exemple être un palpeur SWB 70-5 de la société Krautkrämer GmbH.

L'avantage de la configuration des réalisations particulières précédentes est que, en disposant le palpeur 20 dans l'ouverture 16 du chariot 2 de telle manière à ce que la base supérieure du palpeur 20 rentre en contact substantiellement sur toute sa surface avec le fond 6 de l'ouverture 16, le palpeur 20 est directement disposé à la bonne hauteur par rapport à la surface 22 de la pièce. En d'autres termes, grâce à un usinage précis du profil 4 et une disposition précise des roues 10, l'espacement entre la surface émettrice du palpeur 20 et la surface 22 de la pièce est ajusté à une bonne hauteur de manière uniforme et sans qu'il soit nécessaire d'effectuer un quelconque ajustement manuel. La disposition du palpeur 20 dans l'ouverture 16 du chariot 2 est ainsi aisée et rapide.

La configuration peut être telle que l'espacement entre la surface émettrice du palpeur 20 et la surface 22 de la pièce est compris entre 0,01 millimètres et 1,5 millimètre, ou en particulier entre 0,01 millimètres et 1 millimètre, ou en plus particulier entre 0,05 millimètres et 0,5 millimètres.

Dans une réalisation particulière, la vis introduite dans le trou taraudé 12 sert de vis de serrage pour le maintien du palpeur 20 dans l'ouverture 16 (non représenté). La vis de serrage comprend un filet coopérant avec un pas de vis dans le trou taraudé 12 de l'aile 16. Ces moyens simples de maintien permettent une réduction de coût du chariot 2.

Les roues 10 peuvent être remplacées par des chenilles, des patins ou tout autre moyen équivalent de translation ou déplacement d'un objet sur une surface substantiellement plane.

Le trou taraudé 12 et la vis peuvent être remplacés par tout autre moyen de maintien des roues 10 aux ailes 8.

Le couplant peut être par exemple de l'eau, de l'huile, de la vaseline, du gel ultrasonore, de la colle à tapisser mélangée à de l'eau ou tout autre couplant acoustique liquide ou solide fonctionnellement équivalent.

L'invention concerne également un système comprenant un chariot 2 selon l'invention et un palpeur donné adapté à celui-ci, comme décrit dans les revendications 6 et 7.

L'invention concerne enfin une méthode manuelle de contrôle ultrasons de soudures comme décrit dans les revendications 8 et 9.

## Revendications

1. Chariot (2) pour maintenir un palpeur (20) à ultrasons de contrôle manuel de soudures (18) à une distance donnée d'une surface substantiellement plane (22) et apte à être déplacé le long de la surface (22) à l'aide d'une seule main, comprenant
des roues (10) ou chenilles;
une ouverture (16) pour recevoir le palpeur (20); et
des moyens pour maintenir le palpeur (20) dans l'ouverture (16) à une distance donnée de la surface (22);
**caractérisé en ce qu'**il comprend en outre
deux bords (14);
un profil en U (4) s'étendant entre les deux bords (14) et comprenant un fond (6) et deux ailes (8), le profil en U (4) définissant l'ouverture (16);
les roues (10) ou chenilles étant montées sur les ailes (8) de manière à permettre en opération le déplacement sur la surface (22) du chariot (2) sur ses roues (10) ou chenilles lorsque les ailes (8) sont dirigées vers la surface (22);
l'ouverture (16) s'étendant jusqu'à au moins un des deux bords (14) de manière à permettre le maintien du palpeur (20) dans l'ouverture (16) à fleur ou partiellement au-delà d'au moins un des bords (14).

2. Chariot (2) selon la revendication 1, dont les roues (10) ou les chenilles sont disposées à l'extérieur du profil en U (4) par rapport à l'ouverture (16).

3. Chariot (2) selon l'une quelconque des revendications précédentes, comprenant au moins une roue (10), un trou taraudé (12) et une vis introduite dans le trou taraudé (12), la vis étant porteuse de cette roue (10) et servant de vis de serrage pour le maintien du palpeur (20) dans l'ouverture (16).

4. Chariot (2) selon l'une quelconque des revendications précédentes, adapté pour maintenir un palpeur (20) ayant une base supérieure, une base inférieure émettrice et une hauteur donnée,
l'ouverture (16) du profil (4) et la disposition des roues (10) étant telles que, lorsque la base supérieure du palpeur (20) rentre en contact avec le fond (6) de l'ouverture (16), la base inférieur du palpeur (20) est directement placée à une distance comprise entre 0,01 millimètres et 1 millimètre de la surface (22), lorsque le chariot (2) est placé en opération sur ladite surface (22).

5. Chariot (2) selon la revendication 4, dans lequel, lorsque la base supérieure du palpeur (20) donné rentre en contact avec le fond (6) de l'ouverture (16), la base inférieur du palpeur (20) est directement placée à une distance comprise entre 0,05 millimètres et 0,5 millimètres de la surface (22), lorsque le chariot (2) est placé en opération sur ladite surface (22).

6. Système comprenant un chariot (2) selon l'une quelconque des revendications 1 à 3 et un palpeur (20) ayant une base supérieure, une base inférieure émettrice et une hauteur donnée,
l'ouverture (16) du profil (4) et la disposition des roues (10) étant telles que, lorsque la base supérieure du palpeur (20) donné rentre en contact avec le fond (6) de l'ouverture (16), la base inférieure du palpeur (20) est directement placé à une distance comprise entre 0,01 millimètres et 1 millimètre d'un plan passant par l'extrémité des roues (10) destinée à être en contact à la surface (22), lorsque le chariot (2) est placé en opération sur ladite surface (22).

7. Ensemble selon la revendication 6, dans lequel lorsque la base supérieure du palpeur (20) donné rentre en contact avec le fond (6) de l'ouverture (16), la base inférieur du palpeur (20) est directement placé à une distance comprise entre 0,05 millimètres et 0,5 millimètres de la surface (22), lorsque le chariot (2) est placé en opération sur ladite surface (22).

8. Méthode manuelle de contrôle ultrasons de soudures (18) comprenant une étape consistant à placer un palpeur (20) ayant une forme généralement prismatique, une base supérieure, une base inférieure émettrice et une hauteur donnée, dans l'ouverture (16) d'un chariot (2) selon l'une quelconque des revendications 1 à 5.

9. Méthode selon la revendication 8, dans laquelle l'étape consistant à placer le palpeur (20) comprend le positionnement du palpeur (20) jusqu'à ce que sa base supérieure rentre en contact au contact du fond (6) du profil (4).
